# EUROPEAN PATENT SPECIFICATION

(11) **EP 1 560 411 B1**
(45) Date of publication and mention of the grant of the patent: **26.01.2011**
(21) Application number: 05010059.3
(22) Date of filing: 30.10.2003
(51) Int. Cl.: H04M 3/53

(54) **System for formatting electronic messages from a mobile communication device**
System zur Formatierung von elektronischen Nachrichten eines mobilen Telekommunikationsendgerätes
Système pour le formatage de messages électroniques provenant d'un dispositif de communication mobile

(43) Date of publication of application: 03.08.2005
(62) Divisional of application: 03025013.8
(73) Proprietor: RESEARCH IN MOTION LIMITED, Waterloo, Ontario N2L 3W8 (CA)
(72) Inventor: Vandeputte, Casey, Kitchener, Ontario N2N 1C4 (CA)
(74) Representative: Reichl, Wolfgang

(56) References cited:
- EP-A- 0 866 586
- EP-A- 1 271 909

## Description

### FIELD

The technology described in this patent document relates generally to the field of electronic messaging systems. More particularly, the patent document describes a system and method for formatting electronic messages from a mobile communication device.

### BACKGROUND

Electronic messaging systems that can redirect electronic messages to and from a mobile communication device are known. In such electronic messaging systems, the mobile communication device may be associated with an electronic messaging account within the electronic messaging system. Electronic messages sent from the electronic messaging account are typically formatted using either default settings or formatting preferences established by the account holder. A preferred message format for outgoing electronic messages may typically be configured by an account holder from a desktop client. For example, an account holder may typically set font size, font color, font type and/or other message format characteristics from the desktop client associated with an electronic messaging account. When an electronic message is composed at the desktop client, the message is sent from the electronic messaging account using the default settings or the message format preferences. However, the message format used for messages composed at the desktop client is not typically applied to messages sent from an associated mobile communication device. Thus, an electronic message composed at the mobile communication device may be formatted differently than messages sent from an associated desktop client. For example, a message from the mobile communication device may be formatted using a plain text format while messages from the desktop client may include different font types, colors or sizes.

EP 0 866 586 A1 discloses a messaging system that uses the standard e-mail subject-line to control that the message gets delivered, when a message gets delivered and the appearance of a message when it gets delivered. Escape sequences for use by a sender of the message which can be placed in the subject-line to indicate the sender's preferences for displaying the message are suggested. The subject-line in each message is reviewed by the system to determine if the message contains a predefined escape sequence. If so, the display of the subject-line content within a window on the recipients workstation is determined according to the sender's preferences specified in the subject-line.

### SUMMARY

Systems and methods are provided for formatting electronic messages from a mobile communication device. An electronic messaging system is operable to send and receive electronic messages and to redirect electronic messages to and from a mobile communication device that is associated with an electronic messaging account in the electronic messaging system. Upon receiving an electronic message for redirection from the mobile communication device, the electronic messaging system is operable to identify a message format for the electronic message, reformat the electronic message using the identified message format, and redirect the reformatted message for delivery. The identified message format is used for both electronic messages sent from the mobile communication device and for electronic messages sent from a desktop client associated with the electronic messaging account.

### BRIEF DESCRIPTION OF THE DRAWINGS

Fig. 1 is a block diagram showing an example system and method for formatting electronic messages from a mobile communication device;
Fig. 2 is a block diagram showing an example system and method for formatting reply messages from a mobile communication device;
Fig. 3 is a block diagram showing an example system and method for formatting forwarded messages from a mobile communication device;
Fig. 4 is a block diagram of an example system for redirecting electronic messages to and from a mobile communication device; and
Fig. 5 is a block diagram of an example mobile communication device.

### DETAILED DESCRIPTION

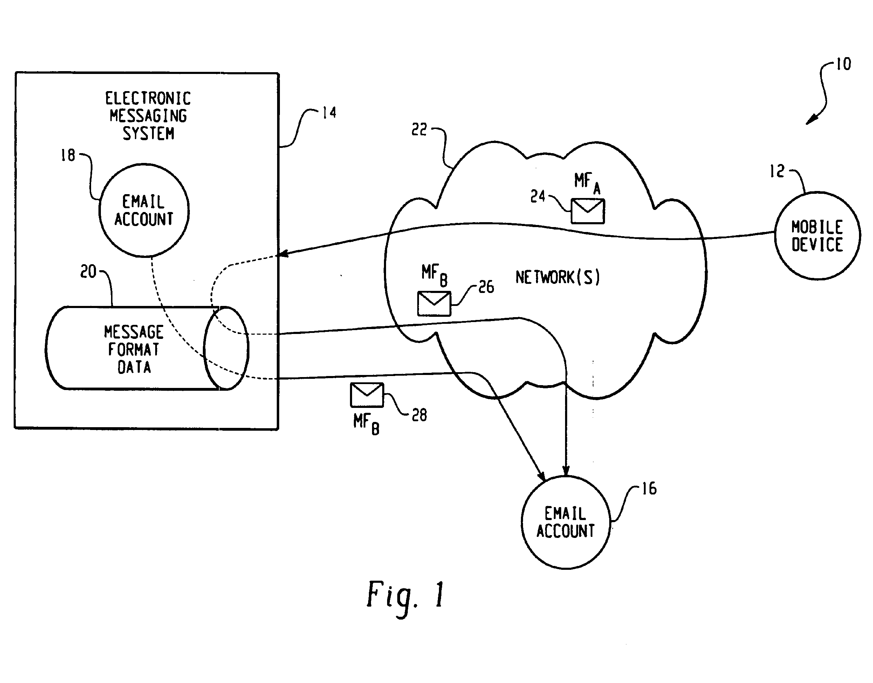

With reference now to the drawing figures, Fig. 1 is a block diagram 10 showing an example electronic messaging system 14 for formatting electronic messages from a mobile communication device 12. The electronic messaging system 14 includes at least one electronic messaging account 18 and a storage medium 20 for storing message format data 20. Also illustrated are a remote electronic messaging account 16 and one or more communication networks 22.

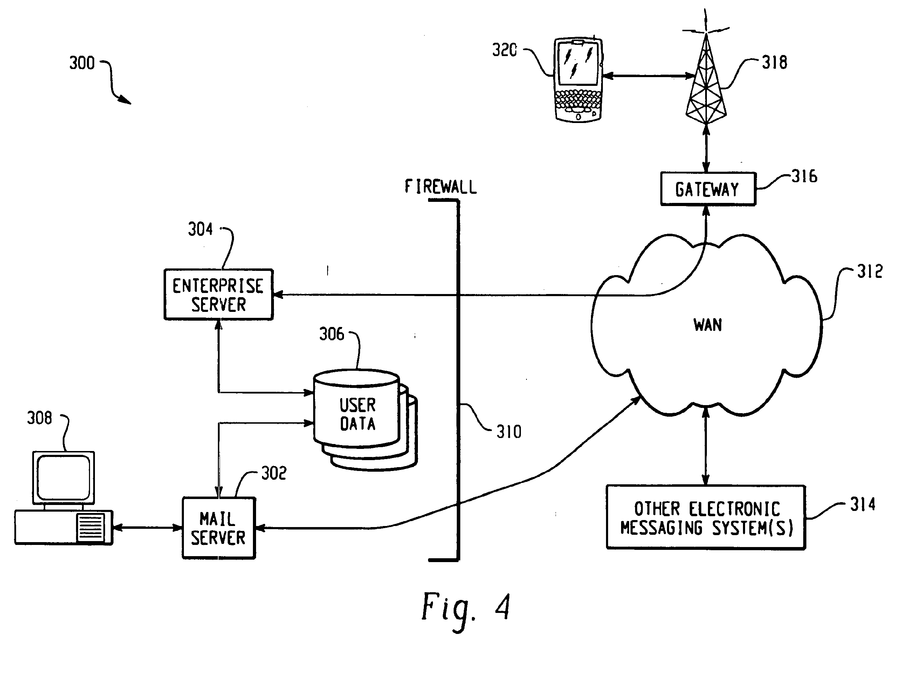

The electronic messaging system 14 may be operable to send and receive electronic messages between electronic messaging accounts 16, 18 and redirect electronic messages to and from the mobile communication device 12. The electronic messaging accounts 16, 18 may, for example, be maintained by electronic messaging software executing on one or more mail servers. The electronic messaging accounts 16, 18 may be included in separate electronic messaging systems (as illustrated) or may be included within the same electronic messaging system 14. The electronic messaging accounts 16, 18 may, for example, operate with associated desktop clients to send and receive electronic messages. The message format data 20 may, for example, be configured by the account holder using a desktop client and stored in an email account database associated with the electronic messaging account 18. An example electronic messaging system 14 is described below with reference to Fig. 4.

The communication networks 22 may include one or more computer networks, such as a wide area network, and one or more wireless communication networks. For example, the remote electronic messaging account 16 may communicate with the electronic messaging system 14 via a wide area computer network, such as the Internet. The mobile communication device 12 may, for example, communicate with the electronic messaging system 14 via both a wide area computer network and a wireless communication network.

In operation, the electronic messaging system 14 formats outgoing electronic messages using the stored electronic message format data 20 such that electronic messages sent from the mobile communication device 12 are formatted the same as electronic messages sent from the associated electronic messaging account 18. For example, a first electronic message 24 may be composed at the mobile communication device 12 using a first message format (MF_{A}) and addressed to the remote electronic messaging account 16. The electronic message 24 from the mobile communication device 12 is sent over the network(s) 22 to the electronic messaging system 14, which reformats the electronic message 24 using the message format data 20. The reformatted message (MF_{B}) 26 is then redirected over the network(s) to the remote electronic messaging account 16. Similarly, an electronic message 28 sent from the electronic messaging account 18 (e.g., composed at a desktop client) is formatted using the message format data 20 and delivered to the remote electronic messaging account 16 over the network(s) 22. In this manner, electronic messages 26, 28 sent to the remote electronic messaging account 16 from either the mobile communication device 12 or the associated electronic messaging account 18 will have the same message format (MF_{B}).

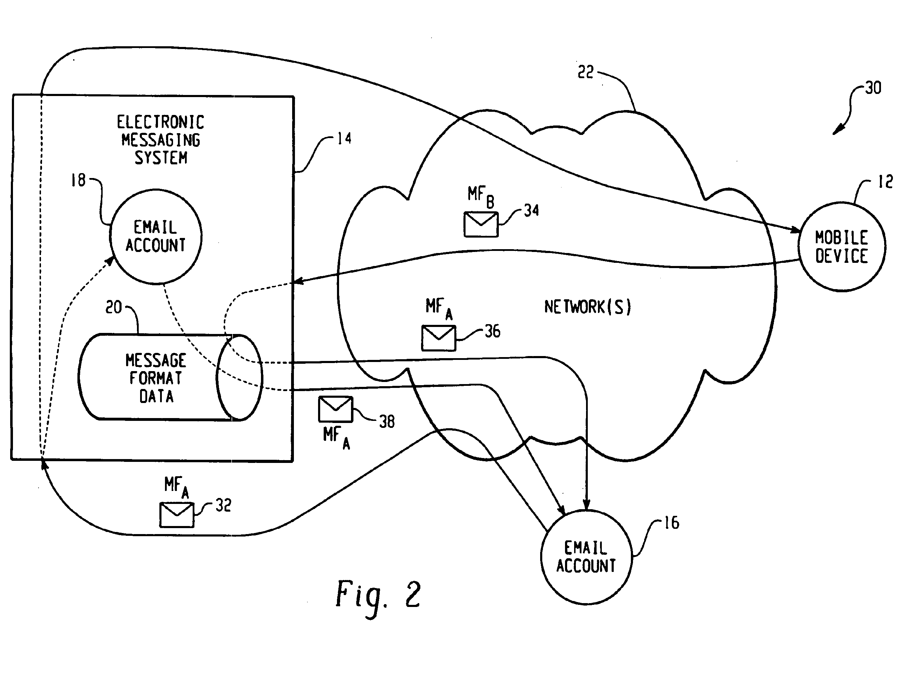

Fig. 2 is a block diagram 30 showing an example electronic messaging system 14 for formatting reply messages from a mobile communication device 12. This example 30 is similar to the example system and method illustrated in Fig. 1, except that the electronic message 34 sent from the mobile communication device 12 is a reply to a message 32 received from the remote electronic messaging account 16.

In a typical electronic messaging system, a reply message sent from a desktop client is often formatted using the same message format as the received message. For example, if a message is received at the electronic messaging account 18 having a message body formatted using a Courier font, then a reply message from the electronic messaging account 18 (e.g., a message created by selecting the reply function at the desktop client) will typically automatically be formatted using the same Courier font. The system and method shown in Fig. 2 extends this automatic formatting process to reply messages from the mobile communication device 12.

The message format data 20 may identify a format to be used by the electronic messaging system 14 for reply messages from both the electronic messaging account 18 and the associated mobile communication device 12. For example, the message format data 20 may instruct the electronic messaging system 14 to format all reply messages using a message format from the original message 32 (i.e., the message being replied to). The message format of the original message 32 may, for example, be identified by the electronic messaging system 14 using metadata, such as a content type field, within the message 32. Alternatively, the message format data 20 could be configured (e.g., by the desktop client) to format reply messages from the electronic messaging account 18 and the mobile communication device 12 in some other uniform manner.

In the example of Fig. 2, an electronic message 32 formatted using a first message format (MF_{A}) is addressed to the electronic mail account 18 and delivered to the electronic messaging system 14 over the network(s) 22. The electronic messaging system 14 then delivers the received message 32 to the identified electronic messaging account 18 and also redirects a copy of the message 32 over the network(s) 22 to the mobile communication device 12. (See, e.g., Fig. 4). If a reply message 38 is sent from the electronic messaging account 18 (e.g., composed by the desktop client), then the electronic messaging system 14 accesses the message format data 20 and formats the reply message 38 using the identified message format (MF_{A}). Similarly, if a reply message 34 is sent from the mobile communication device 12, then the electronic messaging system 14 accesses the message format data 20 to determine the proper format, and reformats the reply message 36 accordingly. For example, the message format data 20 may instruct the electronic messaging system 14 to format reply messages 36, 38 from both the mobile communication device 12 and the electronic messaging account 18 using the same messaging format (MF_{A}) as the received message 32.

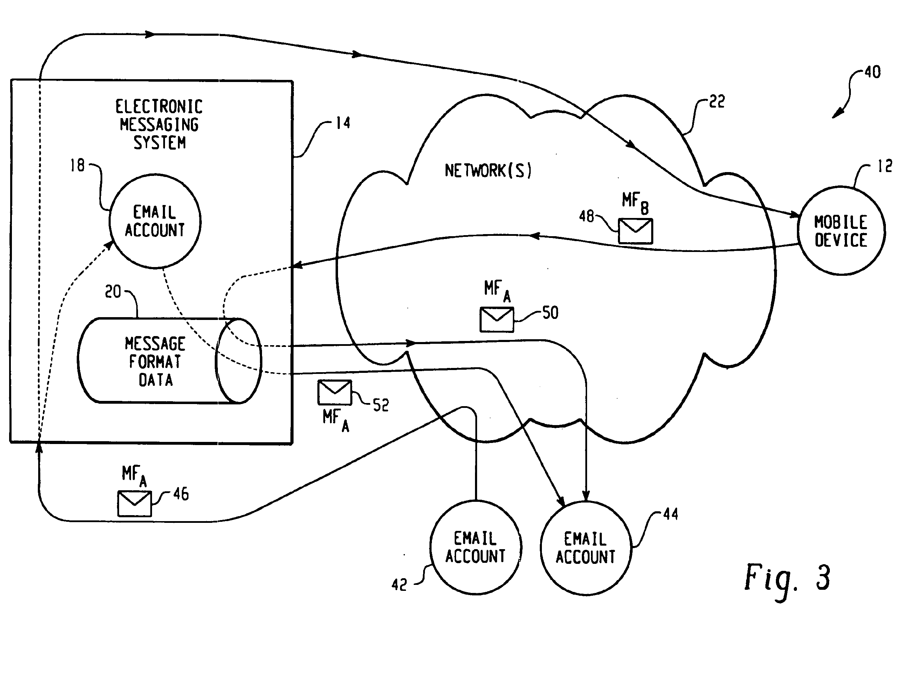

Fig. 3 is a block diagram 40 showing an example electronic messaging system 14 for formatting forwarded messages from a mobile communication device 12. This example 40 is similar to the example systems and methods of Figs. 1 and 2, except that the electronic message 48 sent from the mobile communication device 12 was received from a first electronic messaging account 42 and forwarded to a second electronic messaging account 44.

Similar to a reply message, a forwarded message is often formatted in a typical electronic messaging system using the same message format as the received message. A forwarded message typically includes all or part of the received message and may also include additional message text, attachments, etc. For example, if a message is received at the electronic messaging account 18 formatted with a Courier font type, then typically the same Courier font type will be automatically used for any additional message text included in a forwarded message from the electronic messaging account 18. The system and method show in Fig. 3 extends this automatic formatting process to forwarded messages from the mobile communication device 12.

The message format data 20 may identify a format to be used by the electronic messaging system 14 for forwarded messages from both the electronic messaging account 18 and the associated mobile communication device 12. For example, the message format data 20 may instruct the electronic messaging system 14 to format all forwarded messages using a message format from the original message 46. The message format of the original message 46 may, for example, be identified by the electronic messaging system 14 from metadata within the message 46 (e.g., a content type field). Alternatively, the message format data 20 may be configured (e.g., by the desktop client) to format forwarded messages from electronic messaging account 18 and the mobile communication device 12 in some other uniform manner.

In the example of Fig. 3, an electronic message 46 having a first format (MF_{A}) is addressed to the electronic messaging account 18 and delivered to the electronic messaging system 14 via the network(s) 22. Upon receiving the message 46, the electronic messaging system 14 places the message 46 into the electronic messaging account 18 and also redirects a copy of the message 46 over the network(s) 22 to the mobile communication device 12. (See, e.g., Fig. 4). If a forwarded message 52 is sent from the electronic messaging account 18 (e.g., composed by the desktop client), then the electronic messaging system 14 accesses the message format data 20 and formats the forwarded message 52 using the identified message format (MF_{A}). Similarly, if a forwarded message 48 is sent from the mobile communication device 12, then the electronic messaging system 14 accesses the message format data 20 to identify the message format, and reformats the forwarded message 52 accordingly. For example, the message format data 20 may instruct the electronic messaging system 14 to format forwarded messages 50, 52 from both the mobile communication device 12 and the electronic messaging account 18 using the same messaging format (MF_{A}) as the received message 46.

Fig. 4 is a block diagram of an example system 300 for redirecting electronic messages to and from a mobile communication device 320. The example redirection system 300 includes an enterprise server 304, a mail server 302, a storage medium 306 for electronic messaging (email) account data, and a wireless gateway 316. Also illustrated are the mobile communication device 320, a wireless network 318, a wide area network (WAN) 312, a firewall 310, a desktop client 308, and one or more other electronic messaging systems 314.

The mail server 302 may include electronic messaging software executing on a computer within a local area computer network (LAN). The mail server 302 is coupled to local network devices 304, 306, 308 via the LAN, and is coupled to remote network devices 314, 316 via the WAN 312. The LAN and WAN 312 may be separated by a firewall 310.

The mail server 302 maintains an electronic mail (email) account within the email account database 306 for each desktop client 308 in the LAN. The email account database 306 may be one or more storage devices coupled to the mail server 302, and may be included within the same network device as the mail server 302 or in one or more separate devices within the LAN. The desktop client 308 may be one of a plurality of computers (e.g., personal computers, terminals, laptop computers, or other processing devices) coupled to the mail server 302 via the LAN that execute electronic messaging software to send and receive electronic messages (email) via the mail server.

Electronic messages sent from the desktop client 308 are stored by the mail server 302 in an outgoing message storage location (an "outbox") within a corresponding email account 306. If the outgoing message is addressed to an email account within the LAN, then the mail server 302 delivers the message to an incoming message storage location (an "inbox") in the appropriate email account 306. If the outgoing message is addressed to an email account in another electronic messaging system 314, however, then the message is delivered via the WAN 312. Similarly, incoming electronic mail (email) addressed to the email account 306 is received by the mail server 302 and stored to the email account database 306 within the appropriate incoming message storage location ("inbox"). The incoming email may then be retrieved from the email account 306 by the desktop client 308, or may be automatically pushed to the desktop client 308 by the mail server 302.

The enterprise server 304 may include electronic mail (email) redirection software executing on a computer within the LAN. The enterprise server 304 is operational to redirect electronic mail messages (email) from the email account 306 to the mobile communication device 320 and to place messages sent from the mobile communication device 320 into the email account 306 for delivery by the mail server 302. The enterprise server 304 stores mobile device information, such as a wireless identification (e.g., a PIN), used to communicate with the mobile communication device 320. The enterprise server 304 may, for example, communicate with the mobile communication device 320 using a direct TCP/IP level connection with the wireless gateway 316, which provides an interface between the WAN 312 and the wireless network 318.

When an electronic message (email) is received in the inbox of the email account 306, the email is detected by the enterprise server 304, and a copy of the message and any necessary mobile device information are sent over the WAN 312 to the wireless gateway 316. For example, the enterprise server 304 may encapsulate a copy of the message into one or more data packets along with a wireless identification (e.g., a PIN) for the mobile communication device 320, and transmit the data packet(s) to the wireless gateway 316 over a direct TCP/IP level connection. The wireless gateway 316 may then use the wireless identification and/or other mobile device information to transmit the data packets(s) containing the electronic message over the wireless network 318 to the mobile communication device 320.

Electronic messages sent from the mobile communication device 320 may be encapsulated into one or more data packets along with a network identification for the enterprise server 304 and then transmitted over the wireless network 318 to the wireless gateway 316. The wireless gateway 316 may use the network identification for the enterprise server 304 to forward the data packet(s) over the WAN 312 to the enterprise server 304, preferably via a direct TCP/IP level connection. Upon receiving the data packet(s) from the wireless gateway 316, the enterprise server 304 places the enclosed electronic message (email) into the outbox of the associated email account 306. The mail server 302 then detects the email in the outbox and delivers the message, as described above.

Security may be maintained outside of the firewall 310 by encrypting all electronic messages sent between the enterprise server 304 and the mobile communication device 320. For instance, an electronic message to be redirected to the mobile communication device 320 may be encrypted and compressed by the enterprise server 304, and the encrypted message may then be encapsulated into one or more data packets for delivery to the mobile communication device 320. To maintain security, the electronic message may remain encrypted over the entire communication path 316, 318, 312 from the enterprise server 304 to the mobile communication device 320. Similarly, electronic messages sent from the mobile communication device 320 may be encrypted and compressed by the mobile communication device 320 before being packetized and transmitted to the enterprise server 304, and may remain encrypted over the entire communication path 316, 318, 312 from the mobile communication device 320 to the enterprise server 304.

In addition, the enterprise server 304 may include a communication subsystem, a memory subsystem and a processing subsystem the communication subsystem may be operable to communicate with the wireless gateway 316 over the WAN 312. The memory subsystem may be operable to store data and program information. The processing subsystem may be operable to store and retrieve data in the memory subsystem and execute programs stored in the memory subsystem, and to cause the communication subsystem to transmit and receive information ver the WAN 312. The enterprise server 304 may also include a message formatting program stored in the memory subsystem and executed by the processing subsystem to perform the message formatting functions described herein.

Cross-referencing Figs. 1 and 4, electronic messages that are redirected from the mobile communication device 320 may be reformatted by the enterprise server 304 to match the format of electronic messages composed at the desktop client 308. Upon receiving an outgoing electronic message from the mobile communication device 320, the enterprise server 304 may access message format data 20 stored in the associated user account 306 and reformat the message before placing the reformatted message into the outbox of the email account 306 for delivery by the mail server 302. In this manner, electronic messages composed at the mobile communication device 320 may be delivered in the same format as messages composed at the desktop client 308.

Cross-referencing Fig. 4 with Figs. 2 and 3, reply messages and forwarded messages that are redirected from the mobile communication device 320 may be reformatted by the enterprise server 304 to match the format that would be used if the message where composed at the desktop client 308. Upon receiving an outgoing electronic message from the mobile communication device 320, the enterprise server 304 may determine if the message is a reply message or a forwarded message. If the enterprise server 304 determines that the outgoing message is a reply or forward, then the enterprise server 304 may access message format data 20 stored in the associated user account 306 to determine the message format designated for reply messages or forwarded messages. For instance, the message format data 20 may designate that all reply messages and forwarded messages from either the mobile communication device 320 or the desktop client 308 be formatted using the message format from the original message. The enterprise server 304 may then reformat the outgoing message from the mobile communication device 320 using the designated message format and place the reformatted message into the outbox of the email account 306 for delivery by the mail server 302. In this manner, reply and forwarded messages composed at the mobile communication device 320 may be delivered in the same message format as if composed at the desktop client 308.

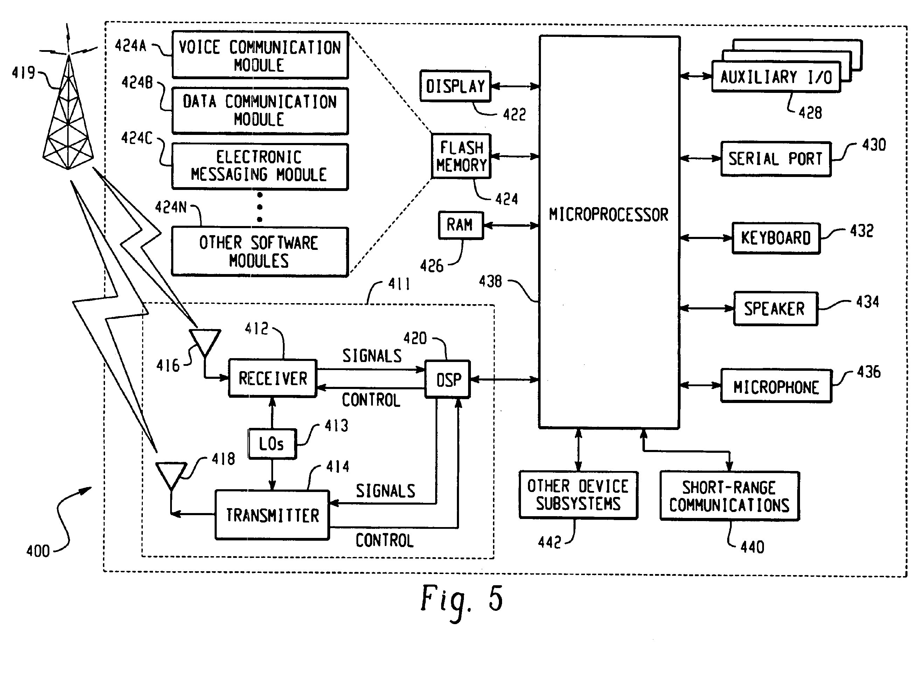

Fig. 5 is a block diagram illustrating an example mobile communication device 400. The mobile communication device 400 includes a processing subsystem 438, a communications subsystem 411, a short-range communications subsystem 440, a memory subsystem 424, 426, and various other device subsystems and/or software modules 442. The mobile communication device 400 also includes a user interface, which may include a display 422, a keyboard 430, a speaker 432, a microphone 436, one or more auxiliary input/output devices 428, a serial port 430, and/or other user interface devices.

The processing subsystem 438 controls the overall operation of the mobile communication device 400. Operating system software executed by the processing subsystem 438 may be stored in a persistent store, such as a flash memory 424, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 426. Communication signals received by the mobile communication device 400 may also be stored to RAM 426.

The processing subsystem 438, in addition to its operating system functions, enables execution of software applications 424 on the device 400. A predetermined set of applications that control basic device operations, such as data and voice communications, may be installed on the device 400 during manufacture. In addition, a personal information manager (PIM) application, including an electronic messaging application, may be installed on the device. The PIM may, for example, be operable to organize and manage data items, such as email, calendar events, voice mails, appointments, and task items. The PIM application may also be operable to send and receive data items via the wireless network 419.

Communication functions, including data and voice communications, are performed through the communication subsystem 411, and possibly through the short-range communications subsystem 440. The communication subsystem 411 includes a receiver 412, a transmitter 414 and one or more antennas 416, 418. In addition, the communication subsystem 411 also includes a processing module, such as a digital signal processor (DSP) 420 or other processing device(s), and local oscillators (LOs) 413. The specific design and implementation of the communication subsystem 411 is dependent upon the communication network in which the mobile communication device 400 is intended to operate. For example, a mobile communication device 400 may include a communication subsystem 411 designed to operate within the Mobitex™ mobile communication system, the DataTAC™ mobile communication system, a GSM network, a GPRS network, a UMTS network, and/or an EDGE network.

Network access requirements vary depending upon the type of communication system. For example, in the Mobitex and DataTAC networks, mobile communication devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile communication device 400 may send and receive communication signals over the communication network 419. Signals received by the antenna 416 from the communication network 419 are routed to the receiver 412, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 419 are processed (e.g., modulated and encoded) by the DSP 420 and are then provided to the transmitter 414 for digital to analog conversion, frequency up conversion, filtering, amplification and transmission to the communication network 419 (or networks) via the antenna 418.

In addition to processing communication signals, the DSP 420 provides for receiver 412 and transmitter 414 control. For example, gains applied to communication signals in the receiver 412 and transmitter 414 may be adaptively controlled through automatic gain control algorithms implemented in the DSP 420.

In a data communication mode, a received signal, such as a text message or web page download, is processed by the communication subsystem 411 and input to the processing device 438. The received signal is then further processed by the processing device 438 for output to a display 422, or alternatively to some other auxiliary I/O device 428. A device user may also compose data items, such as email messages, using a keyboard 438 and/or some other auxiliary I/O device 428, such as a touchpad, a rocker switch, a thumb-wheel, or some other type of input device. The composed data items may then be transmitted over the communication network 419 via the communication subsystem 411.

In a voice communication mode, overall operation of the device is substantially similar to the data communication mode, except that received signals are output to a speaker 434, and signals for transmission are generated by a microphone 436. Alternative voice or audio I/O subsystems, such as a voice message recording subsystem, may also be implemented on the device 400. In addition, the display 422 may also be utilized in voice communication mode, for example to display the identity of a calling party, the duration of a voice call, or other voice call related information.

The short-range communications subsystem 440 enables communication between the mobile communication device 400 and other proximate systems or devices, which need not necessarily be similar devices. For example, the short-range communications subsystem 440 may include an infrared device and associated circuits and components, or a Bluetooth™ communication module to provide for communication with similarly-enabled systems and devices.

This written description uses examples to disclose the invention, including the best mode, and also to enable a person skilled in the art to make and use the invention.

## Claims

1. An electronic messaging system (14) having a mail server (302) operable to send and receive electronic messages and having an enterprise server (304) operable to redirect electronic messages to and from a mobile communication device (12, 320) that is associated with an electronic messaging account (18) in the electronic messaging system (14), the enterprise server (304) comprising:
a memory subsystem operable to store data and program information;
a processing subsystem operable to store and retrieve data in the memory subsystem and execute programs stored in the memory subsystem; and
a message formatting program stored in the memory subsystem and executed by the processing subsystem, the message formatting program being operable to cause the enterprise server (304) to identify a message format for an electronic message received from the mobile communication device (12, 320), reformat the received electronic message using the identified message format, and redirect the reformatted message for delivery by the electronic messaging system (14);
wherein the identified message format is used for both electronic messages sent from the mobile communication device (12, 302) and for electronic messages sent from a desktop client (308) associated with the electronic messaging account (18).

2. The system of claim 1, wherein the message format includes a font type.

3. The system according to one of the claims 1 to 2, wherein the message format includes a font size.

4. The system according to one of the claims 1 to 3, wherein the message format includes a font color.

5. The system according to one of the claims 1 to 4, wherein the message format is identified from metadata included in the electronic message.

6. The system of claim 5, wherein the message format is identified from a content type field in the electronic message.

## Patentansprüche

1. Elektronisches Messaging-System (14), das einen Email-Server (302) hat, der betriebsfähig ist, elektronische Nachrichten zu senden und zu empfangen, und einen Unternehmens-Server (304) hat, der betriebsfähig ist, elektronische Nachrichten an und von einer mobilen Kommunikationsvorrichtung (12, 320) um- bzw. weiterzuleiten, die zu einem elektronischen Messaging-Konto (18) in dem elektronischen Messaging-System (14) gehört, wobei der Unternehmens-Server (304) aufweist:
ein Speicherteilsystem, das betriebsfähig ist, Daten und Programminformation zu speichern;
ein Verarbeitungsteilsystem, das betriebsfähig ist, Daten in dem Speicherteilsystem zu speichern und daraus abzurufen und Programme auszuführen, die in dem Speicherteilsystem gespeichert sind; und
ein Nachrichtenformatierungsprogramm, das in dem Speicherteilsystem gespeichert ist und durch das Verarbeitungsteilsystem ausgeführt wird,
wobei das Nachrichtenformatierungsprogramm betriebsfähig ist, den Unternehmens-Server (304) zu veranlassen, ein Nachrichtenformat für eine elektronische Nachricht zu identifizieren, die von der mobilen Kommunikationsvorrichtung (12, 320) empfangen wird, die empfangene elektronische Nachricht neu zu formatieren unter Verwendung des identifizierten Nachrichtenformats und die neu formatierte Nachricht um- bzw. weiterzuleiten zur Lieferung durch das elektronische Messaging-System (14);
wobei das identifizierte Nachrichtenformat sowohl für elektronische Nachrichten, die von der mobilen Kommunikationsvorrichtung (12, 320) gesendet werden, als auch für elektronische Nachrichten verwendet wird, die von einem Desktop-Client (308) gesendet werden, der zu dem elektronischen Messaging-Konto (18) gehört.

2. System gemäß Anspruch 1, wobei das Nachrichtenformat einen Schrifttyp umfasst.

3. System gemäß einem der Ansprüche 1 bis 2, wobei das Nachrichtenformat eine Schriftgröße umfasst.

4. System gemäß einem der Ansprüche 1 bis 3, wobei das Nachrichtenformat eine Schriftfarbe umfasst.

5. System gemäß einem der Ansprüche 1 bis 4, wobei das Nachrichtenformat aus Metadaten identifiziert wird, die in der elektronischen Nachricht enthalten sind.

6. System gemäß Anspruch 5, wobei das Nachrichtenformat aus einem Inhaltstyp-Feld in der elektronischen Nachricht identifiziert wird.

## Revendications

1. Système de messagerie électronique (14) comprenant un serveur de courrier (302), en mesure d'envoyer et de recevoir des messages électroniques, et comprenant un serveur d'entreprise (304), en mesure de rediriger des messages électroniques en provenance et à destination d'un dispositif de communication mobile (12, 320) qui est associé à un compte de messagerie électronique (18) dans le système de messagerie électronique (14), le serveur d'entreprise (304) comprenant :
un sous-système de mémoire, en mesure de stocker des informations de données et de programmes ;
un sous-système de traitement, en mesure de lire et d'écrire des données dans le sous-système de mémoire et d'exécuter des programmes stockés dans le sous-système de mémoire ; et
un programme de formatage de messages, stocké dans le sous-système de mémoire et exécuté par le sous-système de traitement, le programme de formatage de messages étant en mesure de commander au serveur d'entreprise (304) d'identifier un format d'un message électronique reçu du dispositif de communication mobile (12, 320), de reformater le message électronique reçu en utilisant le format de message identifié et de rediriger le message reformaté pour sa remise par le système de messagerie électronique (14) ;
dans lequel le format de message identifié est utilisé à la fois pour les messages électroniques envoyés par le dispositif de communication mobile (12, 320) et pour les messages électroniques envoyés par un client de bureau (308) associé au compte de messagerie électronique (18).

2. Système selon la revendication 1, dans lequel le format de message comprend un type de police.

3. Système selon la revendication 1 à 2, dans lequel le format de message comprend une taille de police.

4. Système selon l'une des revendications 1 à 3, dans lequel le format de message comprend une couleur de police.

5. Système selon l'une des revendications 1 à 4, dans lequel le format de message est identifié à partir de métadonnées incluses dans le message électronique.

6. Système selon la revendication 5, dans lequel le format de message est identifié à partir d'un champ de type de contenu dans le message électronique.
